Europäisches Patentamt

European Patent Office

Office européen des brevets

(19)

(11) **EP 0 592 647 B1**

# (12) FASCICULE DE BREVET EUROPEEN

(45) Date de publication et mention
de la délivrance du brevet:
**15.04.1998 Bulletin 1998/16**

(21) Numéro de dépôt: **93910083.0**

(22) Date de dépôt: **04.05.1993**

(51) Int Cl.⁶: **H02K 33/06**

(86) Numéro de dépôt international:
**PCT/FR93/00429**

(87) Numéro de publication internationale:
**WO 93/22821 (11.11.1993 Gazette 1993/27)**

(54) **ACTIONNEUR ELECTROMAGNETIQUE A DEUX PIECES MOBILES EN OPPOSITION DE PHASES**

ELEKTROMAGNETISCHER BETÄTIGER MIT ZWEI BEWEGLICHEN ELEMENTEN IN GEGENPHASE

ELECTROMAGNETIC ACTUATOR HAVING TWO OPPOSITE PHASE MOVABLE PARTS

(84) Etats contractants désignés:
**CH DE ES GB IT LI**

(30) Priorité: **04.05.1992 FR 9205465**

(43) Date de publication de la demande:
**20.04.1994 Bulletin 1994/16**

(73) Titulaire: **MOVING MAGNET TECHNOLOGIES S.A.**
**25000 Besançon (FR)**

(72) Inventeur: **OUDET, Claude**
**Fr-25000 Besançon (FR)**

(74) Mandataire: **Pernez, Helga**
**Breese-Majerowicz,**
**3, avenue de l'Opéra**
**75001 Paris (FR)**

(56) Documents cités:
WO-A-90/16109          DE-A- 2 603 681
DE-A- 2 614 973          FR-A- 2 580 440
FR-E- 67 893             US-A- 2 930 915
US-A- 4 583 027          US-A- 5 013 223

## Description

La présente invention concerne un actionneur électromagnétique comportant un pôle central et deux pôles latéraux. Le pôle central supporte une bobine d'excitation, ainsi qu'une partie mobile munie d'aimants permanents minces aimantés selon la direction de l'entrefer.

On connaît dans l'art antérieur des moteurs vibrants de ce type. Afin de limiter les vibrations transmises à la carcasse supportant le stator, le brevet français déposé sous le n° FR-A-2 179 653 a proposé de suspendre non seulement le rotor, mais également le stator. L'actionneur vibrant selon l'art antérieur comporte donc deux masses suspendues dont les caractéristiques (masse, raideur des organes de suspensions) sont définies afin d'égaliser les fréquences propres. Ces actionneurs présentent toutefois une relative fragilité, en raison de la complexité du double système de suspension, et de la mobilité du stator qui implique notamment des liaisons électriques souples.

On connaît également dans l'art antérieur le brevet américain US4583027 décrivant un moteur comportant un seul rotor. Ce rotor est animé d'un mouvement vibratoire provoquant par réaction des vibrations sur le stator et son support.

On connaît également dans l'art antérieur le brevet allemand DE2603681 mettant en oeuvre l'action d'un champ magnétique sur un courant. Le rotor est constitué par un aimant permanent positionné dans l'entrefer. Ce moteur ne permet pas d'atteindre une force satisfaisante par Watt électrique appliqué à la bobine; car les parties actives de la bobine sont celles placées directement dans le champ produit par les aimants. Plus on veut mettre d'épaisseur de cuivre, plus le champ diminue, ou plus les aimants doivent être épais et donc plus la masse mobile est élevée. De plus, chaque aimant est attiré par les deux parties stationnaire en fer, suivant sa distance à chacune d'elles, et aucun moyen n'est proposé pour éviter que ces aimants n'aillent se coller sur l'une d'elles sans que cela gêne le mouvement recherché.

On connaît également le brevet américain US5013223 divulgant une structure de commande de vanne comportant deux aimants séparés par un espace vide. Il ne s'agit pas d'une structure vibratoire, mais d'un système de déplacement de type "ouvert/fermé". Ce document ne divulgue pas la solution technique permettant de remédier au défaut de linéarité de la loi force/courant, car le rotor est destiné à occuper principalement deux positions extrême.

On connaît enfin le brevet PCT WO9016109 de la demanderesse, qui décrit un actionneur pour le déplacement d'une pièce mobile unique, et non pas une structure vibratoire à deux pièces mobiles en sens opposés.

Le but de l'invention est de réaliser un actionneur performant et fiable pour des applications nécessitant un déplacement alternatif, de fréquence élevée, et limitant les vibrations parasites du stator. A cet effet, l'invention concerne dans son acception la plus générale un actionneur comportant un stator fixe muni d'une bobine d'excitation, l'actionneur comportant en outre une pluralité d'éléments indépendants aimantés mobiles en sens opposés, caractérisé en ce que le stator présente un pôle central de longueur $X_c$ et deux pôles latéraux de longueur $X_L$, la bobine entourant la jambe centrale, et en ce que chacun des éléments présente deux paires de pôles définis par une paire d'aimants minces, aimantés selon la direction de l'entrefer, en sens alternés, solidaires d'une culasse en matériau doux, les culasses définissant avec la pièce statorique fixe l'entrefer E.

L'actionneur selon l'invention permet d'optimiser la circulation des flux magnétiques et les contraintes s'exerçant sur les pièces mobiles.

Le déplacement des éléments mobiles est en principe linéaire. L'actionneur selon l'invention peut également être réalisé sous une forme cylindrique, le déplacement des pièces mobiles s'effectuant dans ce cas selon des arcs de cercles inscrits sur un cylindre coaxial avec l'entrefer de forme cylindrique dans ce mode de réalisation.

Selon une première variante, l'organe mobile est constitué de deux éléments mobiles de masses identiques en opposition, chacun desdits éléments mobiles étant reliés à la partie statorique fixe par des moyens déformables pour autoriser un débattement selon la direction de mobilité tout en maintenant un entrefer E sensiblement constant. La quantité de mouvement de l'un des éléments mobiles est identique en valeur absolue, et de sens opposé à la quantité de mouvement (produit de la masse par rapport à la vitesse) de l'autre élément mobile. De ce fait, la quantité de mouvement totale des pièces vibrantes est nulle, ce qui permet de réduire notablement les vibrations parasites communiquées au support de l'actionneur.

Selon une autre variante, l'organe mobile est constitué d'une pièce centrale et de deux pièces latérales, la masse de chacune des pièces latérales étant égale à la moitié de la masse de la pièce centrale, les pièces latérales d'une part et la pièce centrale d'autre part étant mobiles en sens opposée, avec une course de même amplitude, chacune desdites pièces mobiles étant reliée au stator fixe par des moyens élastiquement déformables pour autoriser un débattement selon la direction de mobilité tout en maintenant un entrefer E sensiblement constant.

Ce mode de réalisation permet d'annuler non seulement la quantité de mouvement globale de l'organe mobile, mais également le moment cinétique global de l'organe mobile, et supprime donc le couple vibratoire résiduel.

Selon une autre variante visant à supprimer le couple vibratoire résiduel, le stator est constitué par deux parties en forme de "W" présentant chacune un pôle central de longueur $X_c$ et deux pôles latéraux de longueur $X_L$, l'actionneur comportant deux bobines entourant les jambes centrales, et en ce que l'organe mobile est composé d'au moins deux éléments indépendants de masse identique, mobiles chacun selon des directions parallèles à l'intersection du plan de l'entrefer et du plan médian du stator fixe, en sens opposés, chacune des pièces mobiles présentant une paire d'aimants minces aimantés en sens alternés, solidaires d'une culasse en matériau doux, les aimants minces d'un desdits éléments mobiles étant aimantés selon le sens opposé aux aimants minces correspondant du deuxième élément mobile, les pièces mobiles étant alignées selon la direction de mobilité.

Avantageusement, la liaison entre chacun des éléments mobiles et la partie statorique fixe est assurée par des lames-ressorts s'étendant sensiblement perpendiculairement au plan de l'entrefer.

Selon un mode de réalisation préféré, la longueur $X_c$ du pôle statorique central (3) et la longueur $X_l$ des pôles statoriques latéraux (4, 5) sont supérieures ou égales à la course X de l'organe mobile augmentée d'une longueur sensiblement égale à E, $X_l$ étant supérieur ou égal à Xc.

Selon un mode de réalisation préféré permettant d'augmenter le volume de cuivre sans augmenter les cotes extérieures de l'actionneur, les trois pôles statoriques se prolongent par une partie de section inférieure à leur propre section. Les sections des parties ainsi formées sont déterminées de façon à permettre le passage du flux magnétique en régime nominal sans saturation, les culasses (11, 21) présentent une section trapézoïdale, la grande base correspondant à la surface de jonction avec les aimants permanents.

L'actionneur selon l'invention peut être réalisé en symétrie plane ou en symétrie axiale. Dans le cas de la symétrie axiale, la structure statorique ainsi que le rotor sont de type cylindrique. Le rotor est mobile soit en translation selon un axe Y correspondant à l'axe de courbure de la structure statorique cylindrique et du rotor, soit en rotation autour dudit axe. Dans ce dernier cas, la structure générale correspond à la structure décrite dans le brevet FR9013352 de la demanderesse publié sous le numéro FR2668646, dans laquelle il convient de substituer à l'organe rotatif comportant les parties aimantées des organes mobiles coaxiaux présentant des parties aimantées inversées.

Le pôle central est de préférence séparé des pôles latéraux d'une distance e supérieure ou égale à 0,5 E, où E désigne la largeur de l'entrefer.

Selon un mode de réalisation particulier, l'organe mobile comporte en outre au moins un aimant auxiliaire coopérant avec une bobine électrique pour former un capteur de vitesse et/ou avec une sonde de Hall pour former un capteur de position.

Un mode de réalisation particulier de la présente invention est décrit dans ce qui suit, faisant référence aux dessins, où :

- la figure 1 représente une vue d'un mode de réalisation d'un actionneur selon l'invention, dont la partie mobile est suspendue sur des lames ressort ;

- la figure 2 représente une vue dudit actionneur selon une coupe aa';

- la figure 3 représente une vue dudit actionneur selon une coupe bb';

- la figure 4 représente une vue de coté de l'actionneur selon l'invention

- la figure 5 représente une vue de coté d'une première variante de l'actionneur selon l'invention ;

- la figure 6 représente une vue de l'actionneur selon cc' ;

- la figure 7 représente une vue de face d'une de coté d'une seconde variante de l'actionneur selon l'invention ;

- la figure 8 représente une vue de dessus de l'actionneur selon la seconde variante.

- la figure 9 représente une vue de coté de l'actionneur selon la seconde variante.

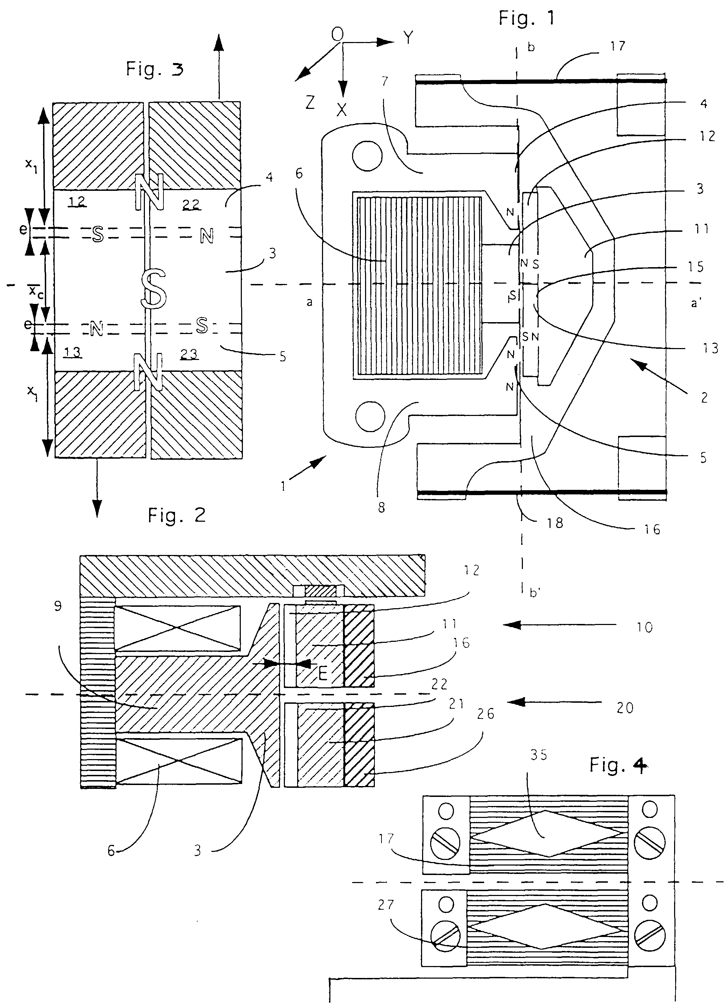

L'actionneur selon l'invention, dont un mode de réalisation est représenté en figure 1, comporte un stator fixe (1) et un organe mobile (2).

Le stator (1) présente un pôle statorique central (3) de longueur $X_c$ et deux pôles statoriques latéraux (4, 5) de longueur $X_l$. Le pôle statorique central (3) est entouré par une bobine (6). Le stator est constitué par un empilement de tôles découpées dans un matériau magnétiquement doux, par exemple en fer-silicium feuilleté. Le pôle statorique central (3) est feuilleté dans un sens perpendiculaire aux tôles constituant les autres parties du stator.

La section des jambes (7, 8) correspondant aux pôles magnétiques latéraux respectivement (4, 5) est inférieure à la surfaces des pôles magnétiques latéraux respectivement (4, 5) correspondant, pour dégager un espace suffisant pour le positionnement de la bobine (6). De même, la section de la jambe centrale (9) est inférieure à la surface du pôle central (3), comme cela est représenté sur la figure 2.

Les polarités des pôles statoriques indiquées sur la figure 1 correspondent à la phase dans laquelle la pièce mobile (2) reçoit un effort dans la direction OX. Pour la phase dans laquelle la pièce mobile (2) se déplace dans la direction opposée XO, le courant appliqué à la bobine est inversé, et donc les polarités des pôles statoriques sont inversées par rapport à celle mentionnées sur les dessins annexés.

La section $S_j$ des jambes est déterminée de façon à limiter $\phi_{max}/S_j$ à environ 1,5 Teslas, où

$\phi_{max}$ désigne le flux magnétique circulant à l'intérieur des jambes suivant la formule :

$$\phi = \left[ \frac{Br\,\dfrac{L}{\mu_r} + \mu_o n i}{\dfrac{L}{\mu_r} + (E\text{-}L)} \right] . \, ZX$$

ou $\mu r$ représente la perméabilité réversible de l'aimant ;

X désigne le déplacement par rapport à la position moyenne

E désigne l'entrefer compris entre la surface inférieure (15) de la culasse (11) et les pôles statoriques (3, 4, 5)

Z désigne la largeur cumulée des deux rotors mesurée dans le sens perpendiculaire à leur déplacement

Br désigne l'induction rémanente des aimants

L désigne l'épaisseur des aimants mesurée dans le sens de l'aimantation,

ni désigne les ampères-tours appliqués à la bobine et

$\mu_o$ désigne la perméabilité du vide.

L'organe mobile (2) est constitué de deux pièces (10, 20) mobiles suivant l'axe OX, en sens alternés.

La pièce mobile (10) visible de face sur la figure 1 et en coupe sur la figure 2 est constituée d'une culasse (11) en matériau doux de forme trapézoïdale, sur la surface inférieure de laquelle sont collés deux aimants minces (12, 13). Ces aimants minces sont aimantés en sens alternés, dans le sens de l'épaisseur. Les aimants sont de préférence du type à terres rares, tels les aimants en Samarium-cobalt $SmCo_5$, ou en néodyme-fer-bore Nd-FeB.

La longueur $X_a$ de chacun des aimants (12, 13) est sensiblement égale à C + 2E, C désignant la course de la pièce mobile (10). Leur épaisseur L est de l'ordre du millimètre pour une valeur de nI inférieure à 300 ampères-tours.

La longueur de la culasse peut être supérieure à la longueur $2X_a$ cumulée des deux aimants (12, 13), et est environ égale à $2X_a$ + E dans l'exemple représenté.

La culasse (11) et les aimants (12, 13) sont encapsulés dans un bloc (16) de matière non magnétique. Pour définir un entrefer E, il convient de maintenir la pièce mobile (10) à une faible distance de la surface des pôles statoriques (3, 4, 5), et ce pour toute la course utile C. Cette fonction peut être assurée par une liaison déformable ou par une liaison élastique. Dans l'exemple décrit en référence, cette fonction est obtenue grâce à des lames-ressort (17, 18) travaillant en flexion alternée avec superposition d'un effort de traction lié à la valeur absolue moyenne de l'induction dans l'entrefer, constituées par des feuilles minces réalisées en acier à ressort tel que le Phynox (dénomination commerciale), s'étendant perpendiculairement au plan des aimants permanents (12, 13). Pour tendre vers des lames dites d'égales contraintes, les lames ressort (17, 18, 27, 28) présentent, comme représenté en figure 4, des évidements (35) en forme de losanges.

La longueur et l'épaisseur des lames-ressort (17, 18) sont déterminés de façon à maintenir les pièces mobiles (10, 20) à la bonne distance du stator, à supporter la contrainte due au déplacement, et à fixer éventuellement la fréquence de résonance de la pièce mobile. Pour mieux supporter la fatigue due à la flexion alternée, on peut disposer plusieurs lames en parallèle.

La longueur $L_r$ des lames ressort (17, 18) peut être en outre déterminée de façon à être suffisante afin que les déplacements de la pièce mobile (10) suivant un axe perpendiculaire au plan des aimants permanents (12, 13), soient négligeables pour la course C.

La géométrie de l'entrefer peut être modifiée pour augmenter ou réduire la raideur magnétique et obtenir un effet similaire à celui obtenu en modifiant la raideur des ressorts de suspension, de façon à réduire les contraintes subies par les lames-ressort sans modifier la fréquence propre.

Lorsque la lame-ressort est longue, les variations de l'entrefer entre l'extrémité de la course et la position centrale sont minimisées et se traduisent par une faible raideur magnétique. La fréquence propre de l'organe mobile est dans ce cas essentiellement déterminée par les caractéristiques des lames-ressort, et en particulier par leur raideur mécanique.

Au contraire, lorsque les lames ressort sont courtes, la distance entre la surface des aimants (12, 13) et les surfaces polaires de la première partie statorique varie sensiblement entre la position centrale et la position dans laquelle l'organe mobile est en fin de course. Cette variation de l'entrefer se traduit par un phénomène de force en l'absence de courant tendant à faire revenir l'organe mobile au repos en position centrée. La fréquence propre de l'organe mobile (25) est donc sensiblement augmentée par la raideur magnétique ainsi obtenue.

La deuxième pièce mobile (20) est identique à la première pièce mobile (10) à l'exception du fait que les aimants (22, 23) sont aimantés selon des sens opposés aux aimants adjacents de la première pièce mobile (10), lorsque toutes les deux sont en position de repos centrée par rapport au pôle statorique central (3).

Les deux pièces mobiles se déplacent en opposition, en raison du renversement des polarités des aimants (12, 13) et (22, 23).

Il est à noter que l'utilisation de deux pièces mobiles vibrant en opposition de phase permet de réduire le flux qui passe par les jambes latérales. Cela permet de réduire les pertes magnétiques et donc de réduire l'encombrement et la masse du stator.

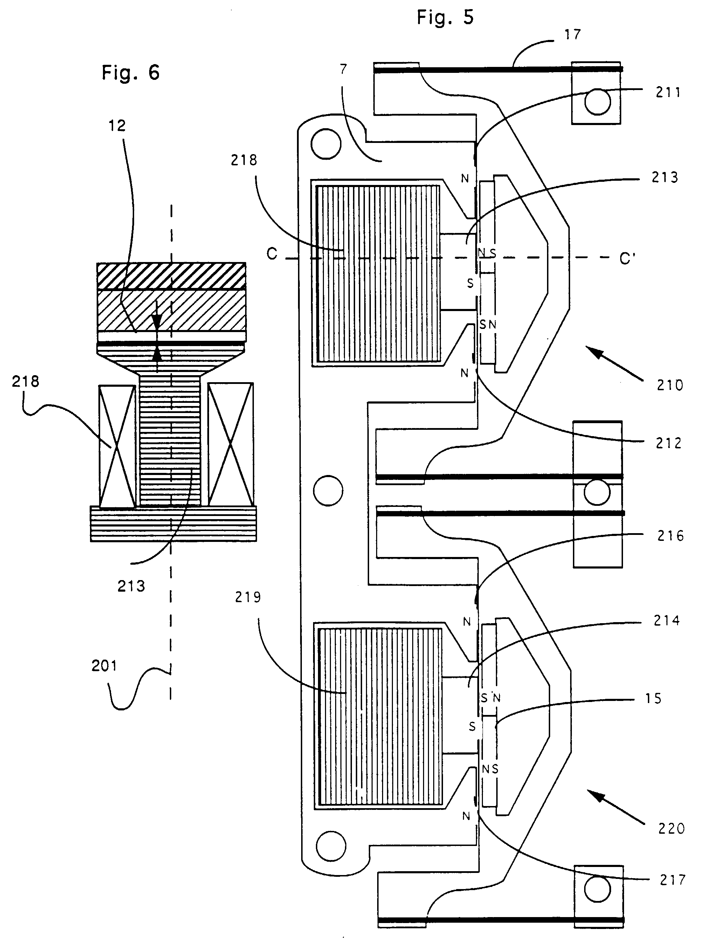

La figure 5 représente une vue de coté d'un actionneur selon une variante permettant de supprimer le couple vibratoire parasite par compensation des moments cinétiques des deux éléments mobiles (210, 220) constituant l'organe mobile.

L'actionneur comporte un stator constitué par une pièce présentant six jambes formant six pôles magnétiques (211 à 217). La structure générale du stator selon cette variante correspond à l'association en ligne de deux stators selon l'exemple de réalisation décrit en référence aux figures 1 à 4.

Chacune des jambes centrales (213, 214) est entourée par une bobine (218, 219). Ces bobines sont alimentées pour entraîner à chaque phase le déplacement de l'élement mobile (210, 220) correspondant dans des sens opposés. Dans l'exemple décrit en référence à la figure 5, les bobines sont alimentées en phase.

La figure 6 représente une vue selon un plan de coupe CC' passant par la jambe centrale (213) et l'un des aimants (12). Les éléments mobiles (210, 220) ne comportent qu'une seule paire d'aimants minces (12, 13) alignés selon l'axe de déplacement des éléments mobiles.

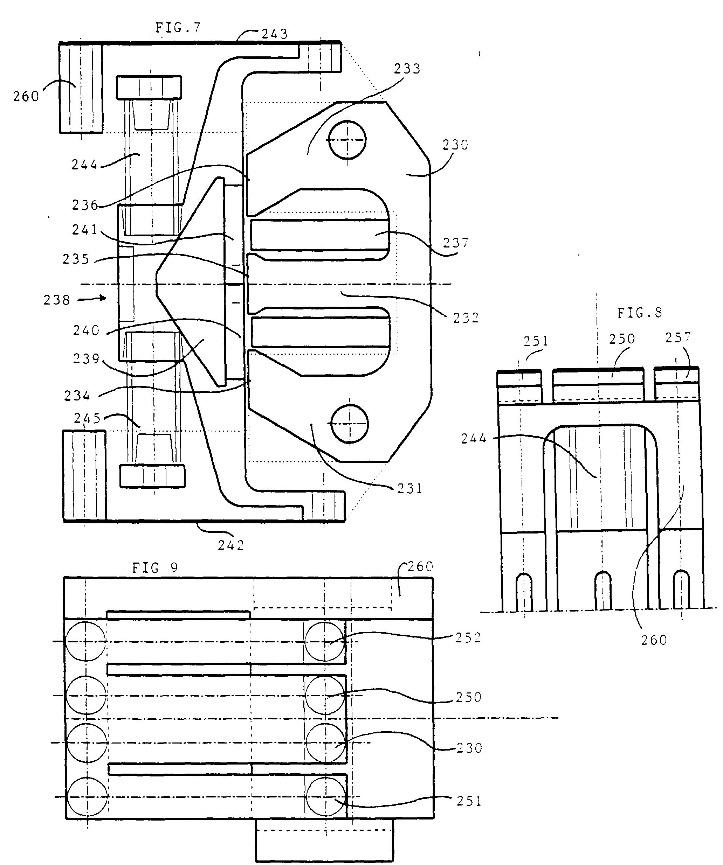

Les figures 7 et 9 représentent une deuxième variante de réalisation respectivement selon une vue de face, une vue de dessus et en vue de coté.

Le stator comporte comme dans la première variante décrite en référence aux figures 1 à 4 une pièce (230) en un matériau doux en forme de "W" présentant deux jambes latérales (231, 233) et une jambe centrale (232) définissant chacune des pôles statoriques (234, 236, 235).

Une bobine (237) entoure la jambe centrale. La section transversale de la jambe centrale (232) est inférieure à la section du pôle centrale (235) afin d'une part de permettre de disposer quelques tours de fils permettant de capter un signal proportionnel à la vitesse des éléments mobiles, et d'autre part, en combinaison avec le dessin des jambes latérales (230, 231), de réduire le flux de fuite qui apparaît dans l'encoche à induction élevée.

L'organe mobile (238) est constitué par une culasse (239) de section trapézoïdale et d'aimants permanents minces (240, 241).

L'organe mobile (238) est suspendu par des lames (242, 243). Des ressorts (244 à 245) engendrent l'essentiel de la raideur nécessaire pour que les deux rotors vibrent en opposition de phase à la fréquence voulue.

L'organe mobile est représenté en demi-vue de dessus en figure 8. Il comporte un élément mobile central (250) et deux éléments mobiles latéraux (251, 252). Chacun des éléments mobiles (250 à 252) est constitué par une culasse trapézoïdale sur laquelle sont collés deux aimants minces. La largeur de l'élément mobile central (250) est égale au double de la largeur de chacun des éléments latéraux (251, 252), et donc le volume, et par conséquent la masse de l'élément mobile central (250) est égal au double du volume et par conséquent de la masse des éléments latéraux (251, 252). Les deux éléments latéraux (251, 252) sont réunis par un pontet de couplage (260).

La figure 9 représente une vue de coté de l'actionneur. Le stator (230) supporte à chaque extrémité un support (260) en forme de "L" inversé sur lequel sont fixées les lames de suspension (262 à 265) destinées au positionnement de l'élément mobile central (252) et des éléments mobiles latéraux (250, 251).

**Revendications**

1.  Actionneur électromagnétique comportant un stator (1) fixe muni d'une bobine d'excitation (6), l'actionneur comportant en outre une pluralité d'éléments (10, 20) indépendants aimantés mobiles en sens opposés,

    caractérisé en ce que le stator présente un pôle central (3) de longueur $X_c$ et deux pôles latéraux (4, 5) de longueur $X_L$, la bobine entourant la jambe centrale (3), et en ce que chacun des éléments (10, 20) présente deux paires de pôles définis par une paire d'aimants minces (12, 13), (22, 23) aimantés selon la direction de l'entrefer, en sens alternés, solidaires d'une culasse (11), (21) en matériau doux, les culasses (11, 21) définissant avec la pièce statorique fixe l'entrefer E.

2.  Actionneur électromagnétique selon la revendication 1 caractérisé en ce que l'organe mobile (2) est constitué de deux pièces (10, 20) mobiles en opposition, chacune des pièces mobiles (10, 20) étant reliée au stator fixe (1) par des moyens élastiquement déformables pour autoriser un débattement selon la direction de mobilité tout en maintenant un entrefer E sensiblement constant, les deux pièces mobiles (10, 20) présentant une masse identique et une course de même amplitude.

3.  Actionneur électromagnétique selon l'une quelconque des revendications précédentes caractérisé en ce que la longueur Xa de chacun des deux aimants (12, 13) est sensiblement égale à C+2E, où C désigne la course de la pièce mobile (10) et E la dimension de l'entrefer.

4.  Actionneur électromagnétique selon l'une quelconque des revendications précédentes caractérisé en ce que l'organe mobile est constitué d'une pièce centrale (250) et de deux pièces latérales (251, 252) se déplaçant en sens opposés au sens de déplacement de la pièce centrale (250), la masse de chacune des pièces latérales (251, 252) étant égale à la moitié de la masse de la pièce centrale (250), lesdites pièces (250, 251 et 252) étant reliées au stator fixe (1) par des moyens élastiquement déformables autorisant un débattement selon la direction de mobilité et maintenant l'entrefer E constant.

5.  Actionneur électromagnétique selon l'une quelconque des revendications 1 ou 2 caractérisé en ce que le stator est constitué de deux parties en forme de "W" présentant chacune un pôle central (213, 214) de longueur $X_c$ et de deux pôles latéraux (211, 212, 216, 217) de longueur $X_L$, l'actionneur comportant deux bobines (218, 219) entourant les jambes centrales (213, 214), et en ce que l'organe mobile (2) est composé d'au moins deux éléments (210, 220) indépendants de masses identiques, mobiles chacun selon des directions parallèles à l'intersection du plan de l'entrefer et du plan médian du stator fixe (201), en sens opposés, chacune des pièces mobiles (210, 220) présentant une paire d'aimants minces (212, 213) (222, 223) aimantés en sens alternés, solidaires d'une culasse (211) en un matériau doux, les aimants minces (222, 223) d'un desdits éléments mobiles (220) étant aimantés selon le sens opposé aux aimants minces (212, 213) de l'autre élément mobile (210), les pièces mobiles (210, 22) étant alignées.

6. Actionneur électromagnétique selon l'une quelconque des revendications précédentes caractérisé en ce que la liaison entre chacune des pièces mobiles (10, 20) et le stator (1) fixe est assurée par des lames-ressort (17, 18, 27, 28) s'étendant sensiblement perpendiculairement au plan de l'entrefer.

7. Actionneur électromagnétique selon l'une quelconque des revendications précédentes caractérisé en ce que la longueur $X_c$ du pôle statorique central (3) et la longueur $X_l$ des pôles statoriques latéraux (4, 5) sont supérieures ou égales à la course X de l'organe mobile augmentée d'une longueur sensiblement égale à E, $X_l$ étant supérieur ou égal à Xc.

8. Actionneur électromagnétique selon l'une quelconque des revendications précédentes caractérisé en ce que la section du noyau central (9) supportant la bobine (6) et les sections des jambes latérales (7, 8) sont inférieures à la section du pôle statorique correspondant.

9. Actionneur électromagnétique selon l'une quelconque des revendications précédentes caractérisé en ce que la distance e séparant le pôle central et chacun des pôles latéraux est supérieure ou égale à 0,5 E où E désigne la largeur de l'entrefer.

10. Actionneur électromagnétique selon l'une quelconque des revendications précédentes caractérisé en ce que les culasses (11, 21) présentent une section trapézoïdale, la grande base correspondant à la surface de jonction avec les aimants permanents.

11. Actionneur électromagnétique selon l'une quelconque des revendications précédentes caractérisé en ce que l'organe mobile comporte en outre au moins un aimant auxiliaire coopérant avec une bobine électrique pour former un capteur de vitesse et/ou avec une sonde de Hall pour former un capteur de position.

**Patentansprüche**

1. Elektromagnetisches Betätigungselement, bestehend aus einem festen Stator (1), der mit einer Erregerspule (6) versehen ist, wobei das Betätigungselement ferner eine Vielzahl von unabhängigen magnetisierten Elementen (10, 20), die in entgegengesetzte Richtungen beweglich sind, umfaßt,
   dadurch gekennzeichnet, daß der Stator einen Mittelpol (3) mit einer Länge $X_c$ und zwei Seitenpole (4, 5) mit einer Länge $X_L$ umfaßt, wobei die Spule die Mittelstrebe (3) umgibt, und daß jedes der Elemente (10, 20) zwei Polpaare aufweist, die durch ein Paar von dünnen Magneten (12, 13), (22, 23) definiert werden, die entlang der Richtung des Luftspalts in abwechselnde Richtungen magnetisiert und mit einem Magnetjoch (11), (21) aus einem weichen Material verbunden sind, wobei die Magnetjoche (11, 21) mit dem festen Statorteil den Luftspalt E definieren.

2. Elektromagnetisches Betätigungselement nach Anspruch 1, dadurch gekennzeichnet, daß das bewegliche Organ (2) von zwei entgegengesetzt beweglichen Teilen (10, 20) gebildet wird, wobei jeder der beweglichen Teile (10, 20) mit dem festen Stator (1) durch elastisch verformbare Mittel verbunden ist, um ein Ausschlagen in die Richtung der Beweglichkeit zu ermöglichen und gleichzeitig einen im wesentlichen konstanten Luftspalt E beizubehalten, wobei die beiden beweglichen Teile (10, 20) eine gleiche Masse und einen Weg gleicher Amplitude aufweisen.

3. Elektromagnetisches Betätigungselement nach einem der vorhergehenden Ansprüche, dadurch gekennzeichnet, daß die Länge Xa jedes der beiden Magneten (12, 13) im wesentlichen gleich C+2E ist, wobei C den Weg des beweglichen Teils (10) und E die Abmessung des Luftspalts bezeichnet.

4. Elektromagnetisches Betätigungselement nach einem der vorhergehenden Ansprüche, dadurch gekennzeichnet, daß das bewegliche Organ von einem Mittelteil (250) und von zwei Seitenteilen (251, 252) gebildet wird, die sich in Richtungen verschieben, die zu der Verschieberichtung des Mittelteils (250) entgegengesetzt sind, wobei die Masse jedes der Seitenteile (251, 252) gleich der Hälfte der Masse des Mittelteils (250) ist, wobei die Teile (250, 251 und 252) mit dem festen Stator (1) durch elastisch verformbare Mittel verbunden sind, die ein Ausschlagen in die Richtung der Beweglichkeit ermöglichen und den Luftspalt E konstant halten.

5. Elektromagnetisches Betätigungselement nach einem der Ansprüche 1 oder 2, dadurch gekennzeichnet, daß der Stator von zwei Teilen in W-Form gebildet wird, die jeweils einen Mittelpol (213, 214) der Länge $X_c$ und zwei Seitenpole (211, 212, 216, 217) der Länge $X_L$ aufweisen, wobei das Betätigungselement zwei Spulen (218, 219) umfaßt, die die Mittelstreben (213, 214) umgeben, und daß das bewegliche Organ (2) von mindestens zwei unabhängigen Elementen (210, 220) gleicher Massen gebildet wird, die jeweils in entgegengesetzte Richtungen beweglich sind, die zum Schnittpunkt der Ebene des Luftspalts und der Mittelebene des festen Stators (201) parallel sind, wobei jeder der beweglichen Teile (210, 220) ein Paar von dünnen Magneten (212, 213) (222, 223) aufweist, die in abwechselnden Richtungen magnetisiert und mit einem Magnetjoch (211) aus einem weichen Material verbunden sind, wobei die dünnen Magneten (222, 223) eines der beweglichen Elemente (220) in die Richtung magnetisiert sind, die zu den dünnen Magneten (212, 213) des anderen beweglichen Elements (210) entgegengesetzt ist, wobei die beweglichen Teile (210, 22) ausgerichtet sind.

6. Elektromagnetisches Betätigungselement nach einem der vorhergehenden Ansprüche, dadurch gekennzeichnet, daß die Verbindung zwischen jedem der beweglichen Teile (10, 20) und dem festen Stator (1) durch Federblättchen (17, 18, 27, 28) gewährleistet wird, die sich im wesentlichen senkrecht auf die Ebene des Luftspalts erstrecken.

7. Elektromagnetisches Betätigungselement nach einem der vorhergehenden Ansprüche, dadurch gekennzeichnet, daß die Länge $X_c$ des mittleren Statorpols (3) und die Länge $X_l$ der seitlichen Statorpole (4, 5) größer oder gleich dem Weg X des beweglichen Organs, erhöht um eine Länge im wesentlichen gleich E, sind, wobei $X_l$ größer oder gleich $X_c$ ist.

8. Elektromagnetisches Betätigungselement nach einem der vorhergehenden Ansprüche, dadurch gekennzeichnet, daß der Querschnitt des Mittelkerns (9), der die Spule (6) trägt, und der Querschnitt der Seitenstreben (7, 8) kleiner als der Querschnitt des entsprechenden Statorpols sind.

9. Elektromagnetisches Betätigungselement nach einem der vorhergehenden Ansprüche, dadurch gekennzeichnet, daß der Abstand e zwischen dem Mittelpol und jedem der Seitenpole größer oder gleich 0,5 E ist, wobei E die Breite des Luftspalts bezeichnet.

10. Elektromagnetisches Betätigungselement nach einem der vorhergehenden Ansprüche, dadurch gekennzeichnet, daß die Magnetjoche (11, 21) einen trapezförmigen Querschnitt aufweisen, wobei die große Basis der Verbindungsfläche mit den Dauermagneten entspricht.

11. Elektromagnetisches Betätigungselement nach einem der vorhergehenden Ansprüche, dadurch gekennzeichnet, daß das bewegliche Organ ferner mindestens einen Hilfsmagneten umfaßt, der mit einer elektrischen Spule zusammenwirkt, um einen Geschwindigkeitssensor und/oder mit einer Hall-Sonde zu bilden, um einen Positionsaufnehmer zu bilden.

**Claims**

1. Electromagnetic actuator including a fixed stator (1) provided with a field coil (6), the actuator also including a plurality of independent magnetized elements (10, 20) mobile in opposite directions, characterised by the fact that the stator has a central pole (3) of length $X_c$ and two lateral poles (4, 5) of length $X_L$, the coil surrounding the central leg (3), and by the fact that each of the elements (10, 20) has two pairs of poles defined by a pair of thin magnets (12, 13), (22, 23) magnetized along the direction of the air-gap, in alternate directions, firmly attached to a yoke (11), (21) of soft material, the yokes (11, 21) defining with the fixed stator part the air-gap E.

2. Electromagnetic actuator as described in claim 1, characterised by the fact that the mobile organ (2) consists of two oppositely mobile parts (10, 20), each of the mobile parts (10, 20) being connected to the fixed stator (1) by means which are elastically deformable to allow play in the direction of mobility while maintaining a substantially constant air-gap E, the two mobile parts (10, 20) having a same mass and a stroke of the same range.

3. Electromagnetic actuator as described in either one of the preceding claims, characterised by the fact that the length $X_a$ of each of the two magnets (12, 13) is substantially equal to C + 2E, in which C represents the stroke of the mobile part (10) and E the dimension of the air-gap.

4. Electromagnetic actuator as described in any one of the preceding claims, characterised by the fact that the mobile organ consists of a central part (250) and of two lateral parts (251, 252) moving in directions opposite to the direction of displacement of the central part (250), the mass of each of the lateral parts (251, 252) being equal to half of the mass of the central part (250), the said parts (250, 251 and 252) being connected to the fixed stator (1) by elastically deformable means allowing play in the direction of mobility and maintaining the air-gap E constant.

5. Electromagnetic actuator as described in either of claims 1 or 2, characterised by the fact that the stator consists of two parts in the form of a "W" each having a central pole (213, 214) of length $X_c$ and of two lateral poles (211, 212, 216, 217) of length $X_L$, the actuator including two coils (218, 219) surrounding the central legs (213, 214), and by the fact that the mobile organ (2) is composed of at least two independent elements (210, 220) of the same mass, each mobile in directions parallel to the intersection of the plane of the air-gap and of the median plane of the fixed stator (201), in opposite directions, each of the mobile parts (210, 220) having a pair of thin magnets (212, 213) (222, 223) magnetised in alternate directions, firmly attached to a yoke (211) made of a soft material, the thin magnets (222, 223) of one of the said mobile elements (220) being magnetised in the opposite direction to the thin magnets (212, 213) of the other mobile element (210), the mobile parts (210, 22) being aligned.

6. Electromagnetic actuator as described in any one of the preceding claims, characterised by the fact that the connection between each of the mobile parts (10, 20) and the fixed stator (I) is effected by spring leaves (17, 18, 27, 28) extending substantially perpendicularly to the plane of the air-gap.

7. Electromagnetic actuator as described in any one of the preceding claims, characterised by the fact that the length $X_c$ of the central stator pole (3) and the length $X_L$ of the lateral stator poles (4, 5) are greater than or equal to the stroke X of the mobile organ increased by a length substantially equal to E, $X_L$ being greater than or equal to $X_c$.

8. Electromagnetic actuator as described in any one of the preceding claims, characterised by the fact that the section of the central core (9) supporting the coil (6) and the sections of the lateral legs (7, 8) are less than the section of the corresponding stator pole.

9. Electromagnetic actuator as described in any one of the preceding claims, characterised by the fact that the distance e separating the central pole and each of the lateral poles is greater than or equal to 0.5 E in which E represents the width of the air-gap.

10. Electromagnetic actuator as described in any one of the preceding claims, characterised by the fact that the yokes (11, 21) have a trapezoidal section, the large base corresponding to the joining surface with the permanent magnets.

11. Electromagnetic actuator as described in any one of the preceding claims, characterised by the fact that the mobile organ also includes at least one auxiliary magnet co-operating with an electrical coil to form a speed sensor and/or with a Hall probe to form a position sensor.

Fig. 3

Fig. 1

Fig. 2

Fig. 4

Fig. 5

Fig. 6

FIG.7

FIG.8

FIG 9